## Europäisches Patentamt

## European Patent Office

## Office européen des brevets

(11) Publication number: **0 015 134**
**B1**

# EUROPEAN PATENT SPECIFICATION

(45) Date of publication of patent specification: **13.02.85**

(51) Int. Cl.⁴: **H 04 N 11/16, H 04 N 9/64**

(21) Application number: **80300471.2**

(22) Date of filing: **19.02.80**

(54) Method of and apparatus for coding and decoding PAL colour television signals.

(30) Priority: **19.02.79 GB 7905757**

(43) Date of publication of application:
**03.09.80 Bulletin 80/18**

(45) Publication of the grant of the patent:
**13.02.85 Bulletin 85/07**

(84) Designated Contracting States:
**DE NL**

(56) References cited:
EP-A-0 004 457
FR-A-2 392 565
GB-A-1 482 079
GB-A-1 511 230
US-A-3 858 240
US-A-3 872 498

PROC IEE, von 125 No. 9 pp. 779 to 786
DEVEREUX et al.
IEEE TRANSACTIONS ON BROADCAST AND
TELEVISION RECEIVERS, vol. BTR-12, no. 2,
May 1966, pages 87-96 New York, U.S.A.
BRUCH: "The PAL Colour TV Transmission
System"

(73) Proprietor: **BRITISH BROADCASTING CORPORATION**
**Broadcasting House**
**London W1A 1AA (GB)**

(72) Inventor: **Drewery, John Oliver**
**27, The Vale**
**Couldson Surrey (GB)**
Inventor: **Clarke, Christopher Keith Perry**
**3 Stumblets**
**Pound Hill Crawley Sussex (GB)**
Inventor: **Weston, Martin**
**102 Horton Hill**
**Epsom Surrey (GB)**

(74) Representative: **Abnett, Richard Charles et al**
**REDDIE & GROSE 16 Theobalds Road**
**London WC1X 8PL (GB)**

Courier Press, Leamington Spa, England.

(56) References cited:

**IEEE TRANSACTIONS ON COMMUNICATION TECHNOLOGY, vol. COM-19, no. 6, December 1971, pages 972-979 New York, U.S.A. GOLDING et al.: "Frequency Interleaved Sampling of a Color Television Signal"**

**SMPTE JOURNAL, vol. 87, no. 10, October 1978, pages 677-681 New York, U.S.A. AUTY et al.: "PAL Color Picture Improvement Using Simple Analog Comb Filters"**

## Description

This invention relates to the coding and decoding of PAL colour television signals.

A paper by V. G. Devereux and J. H. Stott in PROC. IEE., Vol. 125, No. 9, September 1978 at pages 779 to 786 (see also British Patent GB—A—1,511,230) describes a proposal for sub-Nyquist sampling of a digital television signal using a sampling frequency of twice the colour subcarrier frequency in conjunction with comb filtering. The system transmits a composite PAL signal with samples of a single composite signal taken to preserve both luminance and chrominance in the same signal, but retains luminance/chrominance cross effects and introduces other impairments to the signal. When used in a cascaded system, as often will happen in practice, this is highly undesirable.

Our British Patents GB—A—1,534,268 to GB—A—1,534,270, (Inventor: Martin Weston) of which No. 1,534,269 may be taken as typical, describe a digital television transmission or processing system in which there are two transmitted signals, namely a luminance signal $Y_2$ sampled at $2f_{sc}$, and a chrominance signal $C_1$ sampled at $f_{sc}$, where $f_{sc}$ is the colour subcarrier frequency. Before digitisation the PAL chrominance signals U and V are combined into U+V on one television line and U—V on the next. The system can accept signals in separated chrominance and luminance form i.e. YUV form, or in encoded PAL form, and deliver output signals in YUV or encoded PAL' form. Any of these signals may be in analogue form, or in digital form sampled at $4f_{sc}$. Each of the conversion stages of the system incorporated an appropriate comb filter which is based on the use of a line delay device.

The transmitted signals $Y_2$ and $C_1$ form a package which is hereinafter referred to as W. By using the system, a country generating PAL signals can exchange programmes with a country generating YUV signals using the common signal package W. This composite signal W is such that, if it is derived from PAL, it can be transformed back into a PAL signal with, in principle, no loss. This property of no (or substantially no) loss can be referred to as "transparency". A system is transparent if the system output is essentially indistinguishable in practical terms from the system input (any overall delays being discounted).

The YUV output signals obtained from W, on the other hand, are impaired versions of the YUV input signals (assuming these are vertically unfiltered).

Our abovementioned patents mention that a PAL decoder can be constituted by using the PAL to W decoder connected to the circuits which convert the W components signals to Y and U, V respectively.

In a paper entitled "Frequency Interleaved Sampling of a Color Television Signal" by L. S. Golding and R. K. Garlow, published in *IEEE Transactions on Communication Technology,* Vol. COM-19, No. 6, December 1971, pages 972—979, is described a system for the sampling of an analogue luminance signal (not a composite signal) at a sub-Nyquist sampling rate. That paper is based on the assumption that the spectral energy is concentrated at harmonics of the line frequency. Such an assumption inherently applies only to the NTSC system and not to the PAL system. If the sampling frequency is an odd multiple of half the line frequency, the first order spectrum centred on the sampling frequency interleaves with the baseband spectrum and this appears, over the video band, as though the baseband spectrum is folded back about half the sampling frequency. These folded-back or alias components can be rejected by a comb filter having zeroes at odd integral multiples of half the line frequency.

This paper however provides no solution to the problems associated with the coding and decoding of composite PAL signals.

Our British Patent GB—PS 1482079 describes the separation of a composite colour television signal (PAL or NTSC) into 'luminance' and 'colour' components in circumstances where they are not required for processing as separated signals but are separated solely for transmission purposes and thereafter recombined. In these circumstances it does not matter how effective the separation is; all that matters is that the separation is achieved by accurately applying the function used to generate one of the separated signals in inverse form in the generation of the other signal. This is conveniently achieved by forming a first separated signal with any suitable filter, and subtracting this first separated signal from the input signal to provide the second separated signal.

Thus as a PAL coder or decoder this Patent describes very crude circuitry using only known chrominance separation circuits, e.g. a band pass filter.

The present invention is defined in the appended claims to which reference should now be made.

A preferred embodiment of a PAL coder in accordance with the invention is based on the route YUV—W—PAL' (referring to British Patent 1534269 mentioned above).

Furthermore, as the route PAL—W—PAL' is transparent, it follows that in cascaded systems of the same type the route W—PAL'—PAL—W is also transparent. It can further be shown that in cascaded systems of the same type the route W—Y'U'V'—YUV—W is transparent. Thus it is possible, in principle, to cascade any number of systems of the same type, joined either by PAL or YUV ports without impairing the W signal package.

In particular, the route PAL—W—Y'U'V'—YUV—W—PAL is equivalent to the route PAL—W—PAL' which is, in principle, transparent. Thus, decoding using the system followed by recoding also using the system is transparent. Further the route YUV—W—PAL'—PAL—W—Y'U'V' is equivalent to the route YUV—W—Y'U'V', so that coding by the system followed by decoding by the system is equivalent to a YUV transmission path in which luminance is never mixed with chrominance.

Thus it is possible to PAL code and decode using the system and eliminate luminancechrominance cross-effects completely in exchange for the impairments introduced into the YUV signals. These impairments are a reduction in vertical resolution of chrominance and vertical component resolution of high-frequency luminance, and the introduction of luminance aliasing and U—V crosstalk. Such coding and decoding is hereinafter referred to as clean coding and decoding.

This property of eliminating cross-effects depends only on the transparency of the W—PAL'—PAL—W path and thus is independent of the nature of the filters in the YUV—W and the W—Y'U'V' paths. The filters in these paths can thus be chosen with other factors in mind.

The transparency of the W—PAL'PAL—W path is maintained if the delay element in the comb filters involved in this path is any odd number of lines, e.g. 313 or 625 lines.

The sampling in a PAL coder or decoder can be achieved by analogue multiplication followed by simple addition. Over the video band this provides spectrum folding in a manner identical to sub-Nyquist sampling.

Preferably in constructing a PAL coder or decoder embodying the invention, the comb filters in the path between YUV and PAL are collapsed so as to require a minimum of delay elements.

The invention is set out in the appended claims to which reference should now be made, and will be described by way of example with reference to the drawings, in which:

Figure 1 is a block diagram of a colour television transmission system based on our British Patent No. 1,534,269;

Figure 2 illustrates the form of the filters in the system of Figure 1;

Figure 3 is a frequency diagram illustrating how analogue multiplication and addition are equivalent to sampling;

Figure 4 is a block circuit diagram of a PAL coder embodying the invention;

Figure 5 is a block circuit diagram of a PAL decoder embodying the invention;

Figure 6 is a block circuit diagram of a rearrangement of the circuit of Figure 4;

Figure 7 is a block circuit diagram of a rearrangement of the circuit of Figure 5;

Figure 8 is a block circuit diagram of a further simplified rearrangement of the circuit of Figure 4;

Figure 9 is a block circuit diagram of a further simplified rearrangement of the circuit of Figure 5; and

Figure 10 is a block circuit diagram showing the form of the luminance stop filter used in Figures 8 and 9.

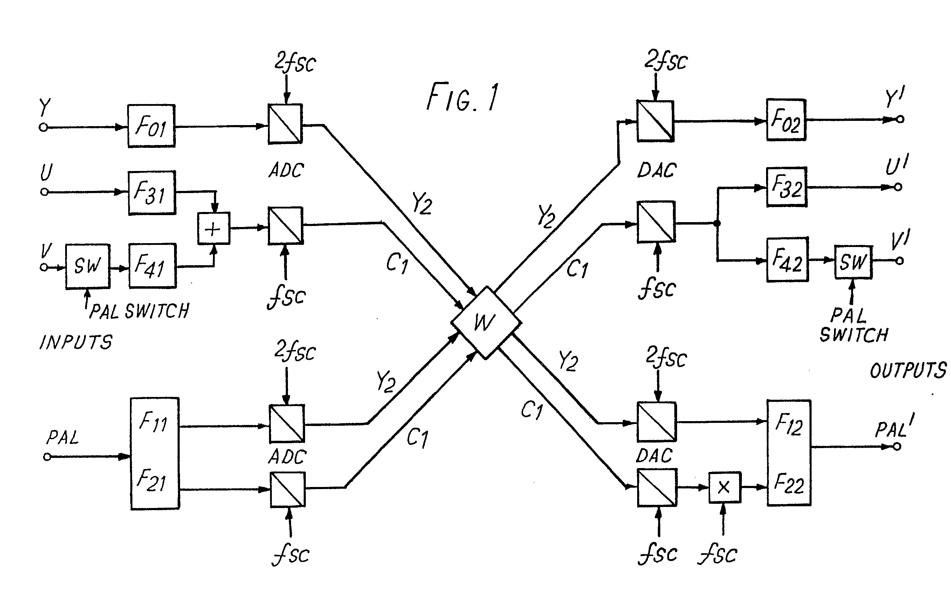

In the system shown in Figure 1, signals can be received either in Y, U, V, form or in encoded PAL form, and can be outputted either in Y' U' V' form or encoded PAL' form. Various comb filters $F_{01}$, $F_{31}$, $F_{41}$, $F_{11}$ and $F_{21}$ are included at the input and comb filters $F_{02}$, $F_{32}$, $F_{42}$, $F_{12}$ and $F_{22}$ are correspondingly included at the output as shown. Filters $F_{11}$, $F_{21}$ and $F_{12}$, $F_{22}$ are fundamental to the system. Filters $F_{11}$ and $F_{12}$ provide a comb filter with a modulus sine response peaking at integral multiples of the television line frequency, while filters $F_{21}$ and $F_{22}$ provide a comb filter with a similar response but peaking at odd integral multiples of half the line frequency. The other filters, being those in the YUV—W and W—YUV paths and which we have now appreciated are not fundamental to the system, have responses which peak at multiples of the line frequency. It will be seen that over the regions where comb filtering takes place, the transmission/frequency characteristic of all these filters is of a modulus sine form. In the central block marked W the signals comprise a luminance signal $Y_2$ sampled at twice the colour subcarrier frequency ($2f_{sc}$) and a chrominance signal $C_1$ sampled at the subcarrier frequency ($f_{sc}$) and consisting of U+V on one television line and U—V on the next. Switching circuits are accommodated in the V and V' signal paths to take account of the PAL switch. It will be seen that the input and output signals are in analogue form and hence analogue-to-digital converters (ADC's) and digital-to-analogue converters (DAC's) are included.

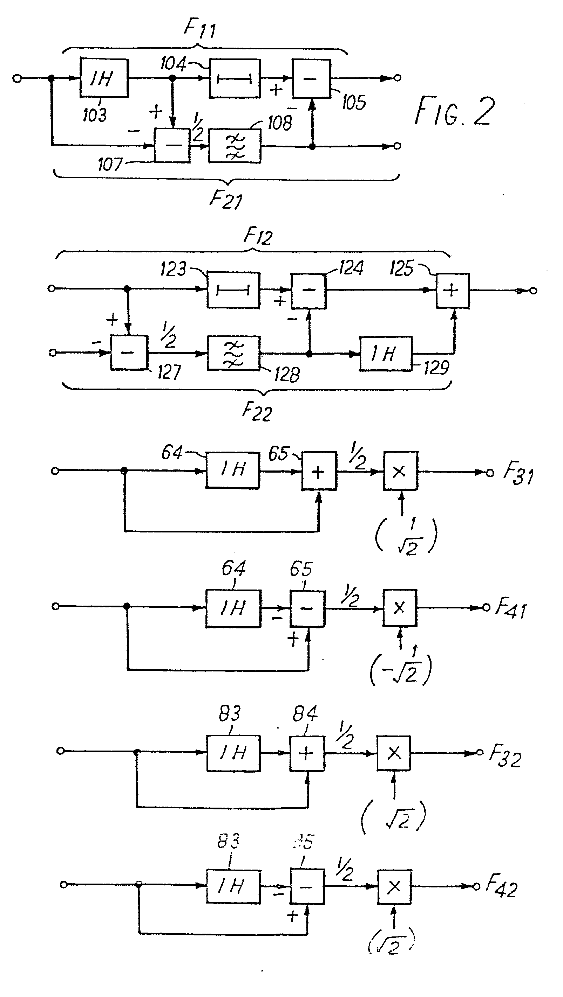

As mentioned above, the elimination of cross-effects in the system depends only on the transparency of the W—PAL'—PAL—W path, and this is independent of the nature of the filters $F_{01}$, $F_{31}$, and $F_{41}$ in the YUV—W path and the filters $F_{02}$, $F_{32}$ and $F_{42}$ in the W—Y'U'V' path. The nature of these filters does, however, govern the form of the impairments introduced into the YUV signals. Figure 2 shows the form of all the filters except $F_{01}$ and $F_{02}$ as described in our Patent 1,534,269, filters $F_{01}$ and $F_{02}$ being identical to filters $F_{11}$ and $F_{12}$ respectively. For further details of these filters reference should be made to our British Patent 1,534,269. In Figure 2 of this application the same reference numerals are used as in our earlier patent.

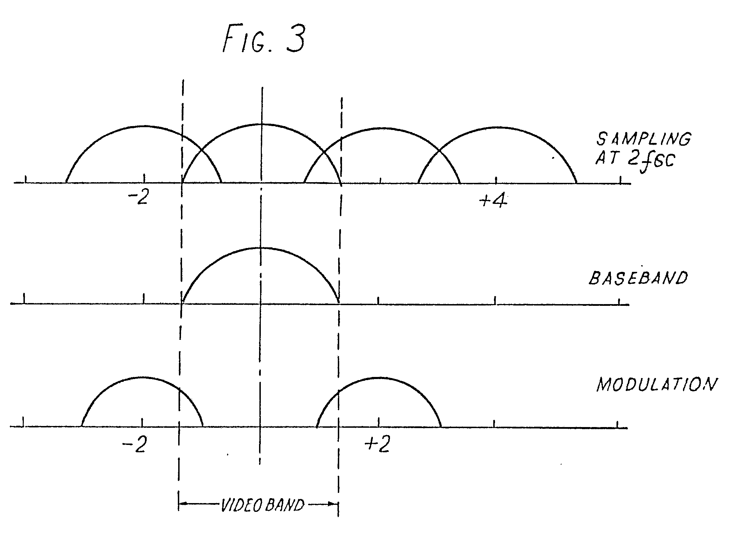

Now, the $2f_{sc}$ sampling action in the luminance path from Y to W can be accomplished, over the video band, by analogue multiplication and addition. Referring to Figure 3, the uppermost waveform shows the effect of sampling the video baseband, itself shown in the second line, at a frequency such as $2f_{sc}$ which is below the Nyquist limit, i.e. is less than twice the maximum video frequency. As is well known, the action of sampling causes the spectrum to be repeated infinitely at spacings equal to the sampling frequency. Within the video band therefore, the sampled signal consists of the baseband signal together with a signal formed by spectrum folding at the upper end of the video band. The

4

relation of these alias components or overlaid spectral components to the television line frequency is well discussed in our earlier patents.

The lowest line in Figure 3 shows what happens when the baseband signal is modulated onto a frequency of $2f_{sc}$, or in other words is multiplied by it. Here the effect is not to cause an infinite number of repetitions of the video band, but rather to cause just two, at $2f_{sc}$ spacing from the baseband signal. We have appreciated that if this modulated signal is now added to the baseband signal, then over the video band the result is the same as is achieved by sampling, with spectrum folding occurring at the edges of the video band.

The sampling action at $f_{sc}$, low pass filtering and re-modulation in the chrominance path of the coder can be accomplished by straightforward modulation. In the decoder, sampling at $f_{sc}$ of the chrominance bandpass signal is equivalent to demodulation at the appropriate phase. Thus it is possible to construct an analogue coder and decoder which produce exactly the same signals as the digital system of our earlier Patents.

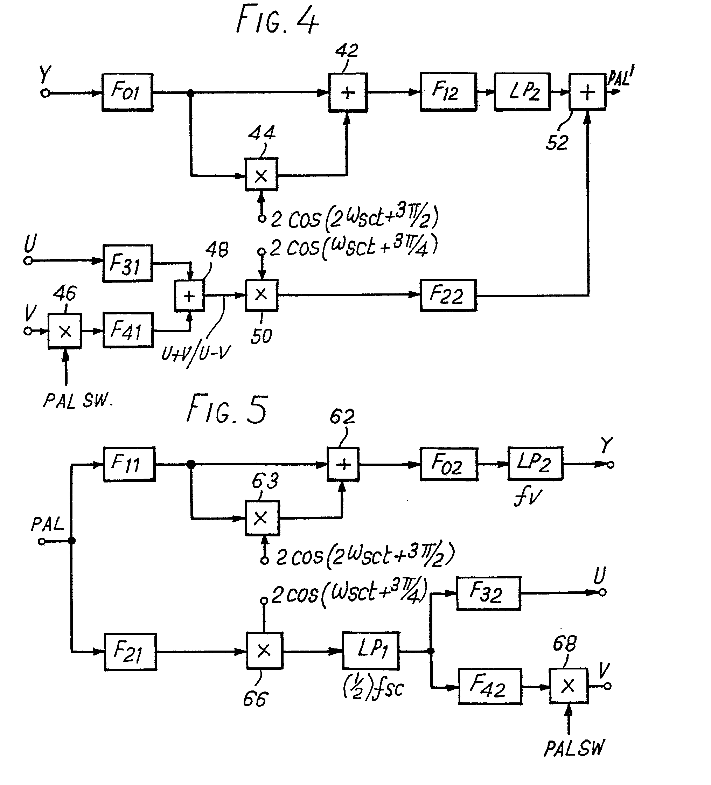

Figures 4 and 5 show respectively an analogue PAL coder and decoder embodying the invention. In Figure 4, the input luminance, filtered by filter $F_{01}$, is mixed in an adder 42 with a version of itself which is modulated in a modulator 44 on a carrier of frequency $2f_{sc}$. Such a modulator, as described above with reference to Figure 3, serves to introduce the luminance alias component, and may be termed a modifier. The mixture of wanted and alias luminance is then filtered by filter $F_{12}$, which removes half-line frequency offset alias components, those at $(n+\frac{1}{2})f_n$, generated from line-offset input components, while allowing the components which are at multiples of the line frequency to pass. Finally, the signal is filtered by a low-pass filter $LP_2$, which is the implicit luminance DAC filter in Figure 1, to remove components, particularly alias components, beyond the nominal video bandwidth.

The U and V chrominance signals are, as in Figure 1, assumed to be limited in bandwidth to $(\frac{1}{2})f_{sc}$ and are prefiltered by their respective filters $F_{31}$ and $F_{41}$, the V signal having been PAL switched in a circuit 46. They are then combined in an adder 48 into a single chrominance signal in the form U+V and U–V on alternate lines, and modulated in a modulator 50 onto a PAL subcarrier ($f_{sc}$) whose phase is appropriately related to the modifier phase. This relationship is such that peaks of the subcarrier coincide with peaks of the twice-subcarrier (luminance) modifier frequency. The modulated chrominance is then passed through comb filter $F_{22}$ which allows components which are at odd integral multiples of the line frequency to pass and restores the quadrature phasing of U and V signals in uniform-coloured areas. This modulated chrominance is then combined in an adder 52 with the luminance to give a PAL signal. In practice the video band filter $LP_2$ can be placed after the adder 52.

In the decoder of Figure 5, the PAL signal is split into two paths by filters $F_{11}$ and $F_{21}$. The effect of the filter $F_{11}$, which averages across a one-line delay in the chrominance band and thus has peak response for line-offset components, is to co-phase the U and V modulated chrominance components in uniform-coloured areas. Thus by adding in an adder 62 a PAL-modified version from multiplier 63 of the output of $F_{11}$ to itself, the chrominance may be cancelled out, provided the modifier phase is appropriately chosen. The signal so processed is then filtered by $F_{02}$ to reduce or eliminate, depending on $F_{01}$, the alias spectrum generated by the modifier. Finally, the filter $LP_2$ ensures that the Y signal is confined to the nominal video bandwidth. The effect of filter $F_{21}$, which takes half the difference across a one-line delay and thus has peak response for half line frequency offset components, is also to co-phase the U and V modulated chrominance and null and line-offset luminance. Thus the output of filter $F_{21}$ requires only a single demodulation in demodulator 66 after which it is low-pass filtered by filter $LP_1$, which is the implicit chrominance DAC filter in Figure 1. Finally the combined chrominance signal is split into U and switched V components by filters $F_{32}$ and $F_{42}$ and the V switch is removed by a circuit 68.

We have now found that the delay elements in the filters in the W—PAL'—PAL—W path (the PAL filters) need not be one-line delays but can be of any odd number of lines. These filters are filters $F_{11}$, $F_{12}$, $F_{21}$, and $F_{22}$, and in particular they can be 313 or 625 lines long, i.e. essentially one field or one picture. Where the delay is N lines long, then the comb filter will have a modulus sine response with peaks at frequencies equal to $f_L/N$; $f_L$ being the line frequency. When longer delays are used, then the YUV output signals obtained by conventional decoding of the clean coder output may exhibit movement smearing.

However, we have also appreciated that the other comb filters, namely the filters $F_{01}$, $F_{02}$, $F_{31}$, $F_{32}$, $F_{41}$ and $F_{42}$, are not as such fundamental to the coder/decoder operation although they can be chosen with a view to optimising system performance.

Filters of interest in the $F_{01}$ and $F_{02}$ positions are (a) where they take the form of $F_{11}$ and $F_{12}$ in Figure 2 with a 1 or 313 or 625 line delay element, or (b) where they are preferably equal and of any one or two dimensional low pass form, cutting near the subcarrier frequency.

Filters of special interest in the $F_{31}$, $F_{32}$, $F_{41}$ and $F_{42}$ positions are (a) where they take the form of Figure 2 with a 1 or 313 or 625 line delay element, or (b) where they take weighted contributions from any number of consecutive lines in one field to form a vertical low pass filter cutting near 78 c/ph (cycles per picture height), such that $F_{31}$ and $F_{32}$ are equal, apart from a scale factor, and the weighting coefficients of $F_{41}$ are those of $F_{31}$ except that alternate values are reversed in sign. Thus, for example, it is possible to have filters based on one-line delays in the luminance path and on 313-line delays in the chrominance path, taking advantage of the lower bandwidth needed for chrominance in moving areas. If the group delays of the luminance and chrominance filters differ, then appropriate compensating delays must be inserted before or after the filters.

The Table appended to this description lists combinations of luminance and chrominance filters of interest showing the delay element of the filters and the amount of compensating delay. The latter is distributed between the coder and decoder in such a way as to minimise the vertical-temporal misregistration at the output of the coder. In the Table, fifteen cases are given and for each the first line gives the magnitude of the main delay, and the second line (or second and third lines) gives the magnitude of the compensating delays. The letter n (possibly with subscripts) is used to mean an integral number of lines, while 1D and 2D mean respectively a filter of any one or two dimensional low pass form. A one dimensional filter is simply a low pass filter to give horizontal filtering, while a two dimensional filter includes line delays to give vertical filtering within a field.

All the combinations of the Table could, in theory, be used with 313- or 625-line based filters at $F_{11}$, $F_{12}$, $F_{21}$ and $F_{22}$ (the PAL filters). However, combinations of practical interest are:

    (a) all the combinations of the Table and line based PAL filters.

    (b) 313-line based combinations of the Table and 313-line based PAL filters.

    (c) 625-line based combinations of the Table and 625-line based PAL filters.

It is possible that the combinations which include 625-line based filters would lead to unacceptable movement smearing, but the one (case 15) with 625-line filters in all positions corresponds to perfect transmission of stationary pictures, i.e. no cross-effects and no loss of resolution in the Y, U and V signals. For this case the clean coding produces an identical signal to conventional coding (discounting any delay), apart from reducing noise, and it is the clean decoder which is of primary interest.

For moving pictures, an adaptive system could be devised which switched between 625-line and 313-line or 1-line based filters according to the decision of a motion sensor. With such an arrangement it would be necessary to ensure no difference of overall group delay between the different states.

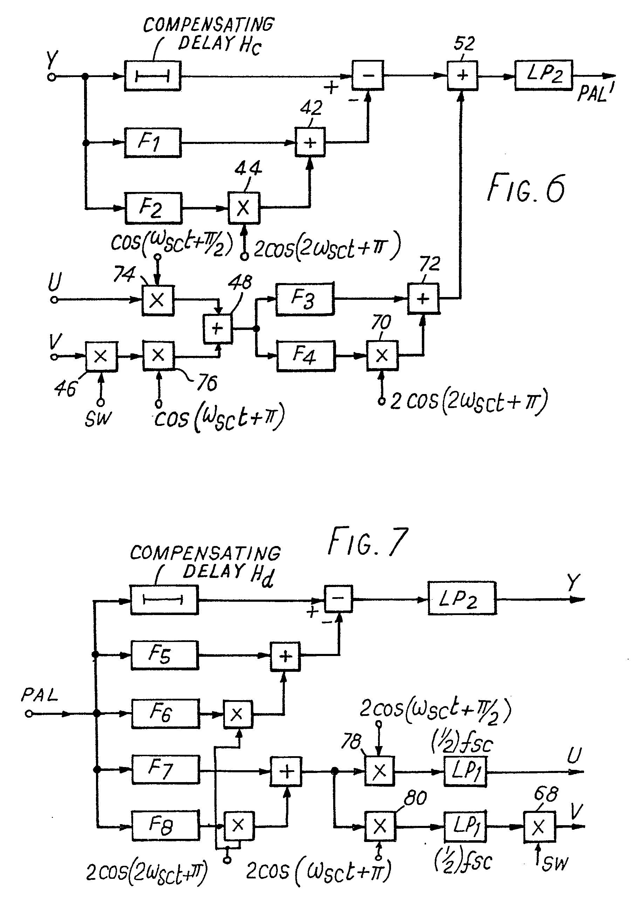

The luminance path in the coder of Figure 4 includes two comb filters in series, $F_{01}$ and $F_{12}$. These, and the other series connected comb filters, can be rearranged so that the circuits of Figures 4 and 5 become the circuits of Figures 6 and 7. In the circuit of Figure 6, the filters $F_1$ and $F_2$ control the wanted and alias luminance spectra respectively. Here again the technique of multiplication and addition is used to generate the required spectrum folding. In the chrominance path, it is possible to modulate the U and V filters onto subcarrier using modulators 74, 76 as shown and then to filter using filters $F_3$ and $F_4$ together with a multiplier 70 and adder 72 operating on the composite U, V signal. The filters $F_3$ and $F_4$ control the asymmetry of the quadrature-modulated chrominance spectra about their carriers. An equivalence exists between filters $F_1$ and $F_2$ and filters $F_{01}$ and $F_{12}$ and between Filters $F_3$ and $F_4$ and filters $F_{31}$, $F_{41}$ and $F_{22}$, as discussed below.

In the decoder of Figure 7 filters $F_5$ and $F_6$ control the wanted and alias luminance spectra respectively, whilst discriminating, with the aid of the modifier, against the subcarrier. Filters $F_7$ and $F_8$ control the wanted and cross-talk chrominance spectra, whilst discriminating against line-locked luminance. Demodulators 78 and 80 are provided for the U and V signals respectively. In the same way as in the coder, an equivalence exists between filters $F_5$ and $F_6$ and filters $F_{11}$ and $F_{02}$, and between filters $F_7$ and $F_8$ and filters $F_{22}$, $F_{32}$ and $F_{42}$.

A problem with the arrangements of Figures 4 and 5 is that the filters cannot share storage because they are dispersed. This becomes significant if some of the filters are based on 313- or 625-line delay elements. However, the arrangements of Figures 6 and 7 permit storage sharing.

The relationship between filters $F_1$ and $F_8$ and the filters of Figure 1 are given by:

$$F_1 = H_c - F_{01}F_{12}$$

$$F_2 = -F_{01}(F_{12}^{+2} + F_{12}^{-2})H_{90}^*$$

$$F_3 = \tfrac{1}{2}F_{22}[(F_{31}^{+1} + F_{31}^{-1})H_{45} + (F_{41}^{+1} + F_{41}^{-1})H_{45}^*]$$

$$F_4 = \tfrac{1}{2}F_{22}^{+2}[F_{31}^{+1}H_{45}^{+2} - F_{41}^{+1}H_{45}^{*+2}] + \tfrac{1}{2}F_{22}^{-2}[F_{31}^{-1}H_{45}^{-2} - F_{41}^{-1}H_{45}^{*-2}]$$

$$F_5 = H_d - F_{11}F_{02}$$

$$F_6 = -F_{11}(F_{02}^{+2} + F_{02}^{-2})H_{90}^*$$

$$F_7 = \tfrac{1}{2}F_{21}[(F_{32}^{+1} + F_{32}^{-1})H_{45}^* + (F_{42}^{+1} + F_{42}^{-1})H_{45}]$$

$$F_8 = \tfrac{1}{2}F_{21}[(F_{32}^{+1} + F_{32}^{-1})H_{45}^* - (F_{42}^{+1} + F_{42}^{-1})H_{45}]$$

In these equations $H_c$ and $H_d$ are the transfer functions of the delays of the filters $F_{01}$ $F_{12}$ and $F_{11}$ $F_{02}$ respectively, and $H_{45}$ and $H_{90}$ are the transfer functions of a 45° and 90° phase advance, an asterisk indicating the conjugate (phase retardation). $F^n$ represents a transfer function shifted so that its origin lines at $nf_{sc}$ i.e.:—

$$F^n \equiv F^n(x) = F(x - nf_{sc})$$

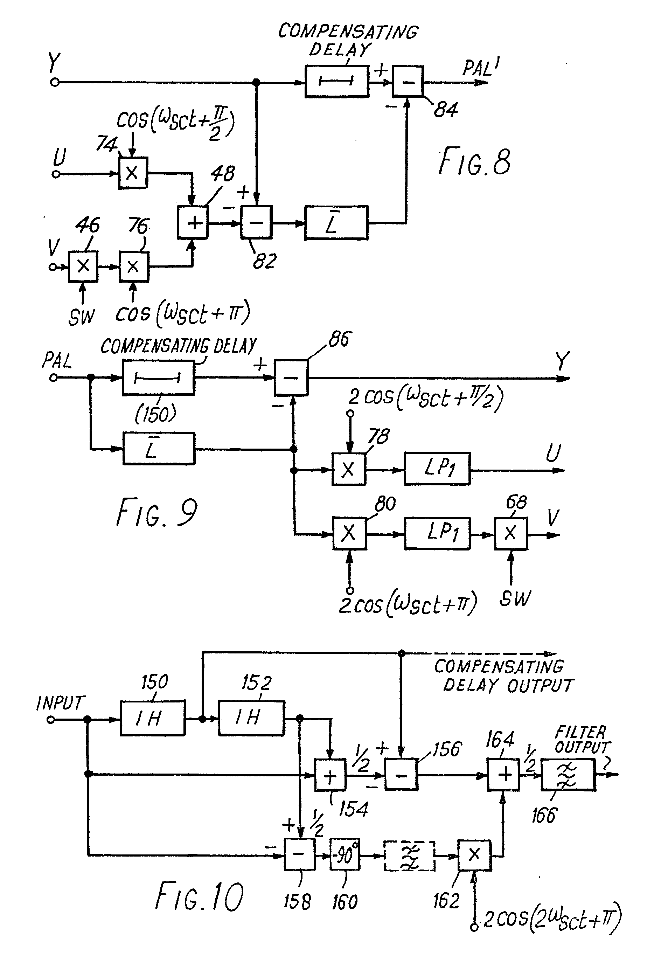

If the filters in the coder path of Figure 1 all use the same delay element i.e. are all based either on 1 or 313 or 625 line delays, then filters $F_3$ and $F_4$ are respectively equal to filters $F_1$ and $F_2$. Similarly if the filters in the decoder path of Figure 1 satisfy the same condition, then filters $F_7$ and $F_8$ are respectively equal to filters $F_5$ and $F_6$. Then the coder and decoder can be further simplified to the arrangements of Figures 8 and 9, where the filters $\bar{L}$ are luminance-stop filters. In the coder the luminance-stop filter $\bar{L}$ is used to pass the modulated chrominance, thus making the luminance and chrominance spectra complementary. In the decoder the filter $\bar{L}$ separates out the modulated chrominance for quadrature demodulation.

If the system of Figure 1 uses the one-line-based filters of Figure 2, where $F_{01}$ and $F_{02}$ are respectively equal to $F_{11}$ and $F_{12}$, then the form of $\bar{L}$ is the same in both coder and decoder and is shown in Figure 10. The decoder compensating delay may be part of $\bar{L}$ as shown.

The luminance stop filter $\bar{L}$ shown in Figure 10 will first be described and is seen to consist of two one-line delays 150, 152 in series, the output of delay 150 constituting an auxiliary output used in the decoder. The average of the input and two-line-delayed signals is taken in a halving adder 154 and this is substracted from the one-line delayed signal in a subtractor 156. The difference between the input and two-line-delayed signals is also taken in a halving subtractor 158, and the phase of this signal retarded by 90 degrees in a circuit 160. The resultant is multiplied in a multiplier 162 by twice subcarrier at appropriate phase, and the resultant is added to the output of subtractor 156 in a halving adder 164. The adder output is band pass filtered in a chrominance filter 166.

This filter $\bar{L}$ is used in both Figures 8 and 9. The filter is seen to provide essentially all the functions of the filters $F_1$ to $F_4$ in Figure 6 and of $F_5$ to $F_8$ in Figure 7. This filter is therefore particularly advantageous in reducing the number of delay elements required.

As shown in Figure 8, the output of adder 48 is applied to the subtractive input of a subtractor 82, the other input of which receives the luminance signal Y. The output of subtractor 82 is applied through the filter $\bar{L}$ to the subtractive input of a subtractor 84 which receives the luminance signal subject to a compensating delay to allow for the mean delay of the luminance stop filter $\bar{L}$. In the decoder of Figure 9, the PAL signal is applied to the luminance stop filter $\bar{L}$ and a subtractor 86 receives at its subtractive input the main output of the filter $\bar{L}$. At its other input it receives the PAL input signal subject to compensating delay, conveniently provided by the delay 150 (as shown) of the filter $\bar{L}$. The filter output is also supplied to the demodulation and separation circuitry to provide U and V output signals.

More generally, the same arrangements are applicable if 313- or 625-line based filters are used throughout, when the delay elements of Figure 10 are modified accordingly. However, in the 313-line case the transfer functions $H_{45}$ and $H_{90}$ represent phase shifts of $-45°$ and $-90°$ respectively and the demodulation phase of U is reversed.

Any of the circuit arrangements of Figures 4 to 10 may be realised digitally using an arbitrary sampling frequency in the region of three times the subcarrier frequency. However, a bandpass filter must then precede the modifier wherever it occurs, as shown dotted in Figure 10. The lower cut-off frequency of the bandpass filter must lie between $f_s - 2\frac{3}{4}f_{sc}$ and $2f_s - 5\frac{1}{4}f_{sc}$, where $f_s$ is the digital sampling frequency. The upper cut-off frequency must lie between the nominal video bandwidth and half the sampling frequency.

TABLE

Delay basis in lines of luminance and chrominance filters used in Figure 1 and compensating filters

| Case | $F_{01}$ | $F_{02}$ | $F_{31}/F_{41}$ | $F_{32}/F_{42}$ |
|---|---|---|---|---|
| 1 | 1D | 1D | 2n | 2n |
|  | n | n | 0 | 0 |
| 2 | 1D | 1D | 2n+1 | 2n+1 |
|  | n+1 | n | 0 | 0 |
| 3 | 1 | 1 | 2n+1 | 2n+1 |
|  | n | n | 0 | 0 |
| 4 | 2D (group delay $n_1$) | | $2n_2$ | $2n_2$ |
| $n_2>n_1$ | $n_2-n_1$ | $n_2-n_1$ | 0 | 0 |
| $n_2<n_1$ | 0 | 0 | $n_1-n_2$ | $n_1-n_2$ |
| 5 | 2D (group delay $n_1$) | | $2n_2+1$ | $2n_2+1$ |
| $n_2>n_1$ | $n_2-n_1+1$ | $n_2-n_1$ | 0 | 0 |
| $n_2<n_1$ | 1 | 0 | $n_1-n_2$ | $n_1-n_2$ |
| 6 | 1D | 1D | 313 | 313 |
|  | 313 | 0 | 0 | 0 |
| 7 | 1 | 1 | 313 | 313 |
|  | 312 | 0 | 0 | 0 |
| 8 | 2D (group delay n) | | 313 | 313 |
|  | 313 | 0 | n | n |
| 9 | 313 | 313 | 313 | 313 |
|  | 0 | 0 | 0 | 0 |
| 10 | 625 | 625 | 313 | 313 |
|  | 0 | 0 | 312 | 0 |
| 11 | 1D | 1D | 625 | 625 |
|  | 313 | 312 | 0 | 0 |
| 12 | 1 | 1 | 625 | 625 |
|  | 312 | 312 | 0 | 0 |
| 13 | 2D (group delay n) | | 625 | 625 |
|  | 313-n | 312-n | 0 | 0 |
| 14 | 313 | 313 | 625 | 625 |
|  | 0 | 312 | 0 | 0 |
| 15 | 625 | 625 | 625 | 625 |
|  | 0 | 0 | 0 | 0 |

## Claims

1. A method of encoding Y, U and V signals into a PAL colour television signal, comprising:

processing the luminance signal Y to provide a processed signal in which an upper portion of the video band overlaid spectral components formed by reflection in a signal having a frequency of twice the colour subcarrier frequency are added to the luminance signal;

comb filtering the said processed signal at least over the said upper portion of the video band with a modulus sine response having peaks at integral multiples of $f_L/N$, where $f_L$ is the television line frequency, and N is an odd integer;

forming the U and V signals into a composite chrominance signal C based on U+V and U—V on alternate lines;

8

O O15 134

modulating the chrominance signal C onto a signal of the colour subcarrier frequency having peaks coincident with peaks of the signal of twice the colour subcarrier frequency;

comb filtering the modulated chrominance signal with a modulus sine response having peaks at odd integral multiples of $f_L/2N$; and

combining the comb-filtered luminance signal and the comb-filtered modulated chrominance signal to provide an encoded PAL signal.

2. A method according to claim 1, including additional filtering to prefilter the Y signal.

3. A method according to claim 1, including additional filtering to prefilter the U and V signals.

4. A method of decoding a PAL colour television signal into Y, U and V signals, comprising:

comb filtering the PAL signal at least over an upper portion of the video band with a modulus sine response having peaks at odd integral multiples of $f_L/2N$ to provide a first comb-filtered signal thereby co-phasing the modulated U and V chrominance components at the PAL input signal in respect of uniformly coloured areas of picture;

multiplying the first comb-filtered signal by an appropriately-phased signal of subcarrier frequency to provide a demodulated chrominance signal based on U+V and U—V on alternate lines;

separating the multiplied signal into its U and V components; and

comb-filtering the PAL signal at least over an upper portion of the video band with a modulus sine response having peaks at integral multiples of $f_L/N$, where $f_L$ is the television line frequency and N is an odd integer, to provide a second comb-filtered signal;

processing the second comb-filtered signal to provide a luminance signal Y in which over the video band overlaid spectral components formed by reflection in a signal having a frequency of twice the colour sub-carrier frequency are added to the second comb-filtered signal in the appropriate phase.

5. A method according to claim 4, including additional filtering to post-filter the Y signal.

6. A method according to claim 4, including additional filtering to post-filter the U and V signals.

7. A method according to claim 2 or 5, in which the additional filtering provides comb filtering with a modulus sine response having peaks at integral multiples of $f_L/N$.

8. A method according to claim 2 or 5, in which the additional filtering provides one or two dimensional low-pass filtering cutting near the subcarrier frequency.

9. A method according to claim 3 or 6, in which the additional filtering provides comb filtering with a modulus sine response having peaks of integral multiples of $f_L/N$.

10. A method according to claim 3 or 6, in which the additional filtering takes weighted contributions from several consecutive lines in a field to form a vertical low-pass filter cutting near 78 cycles per picture height.

11. A method according to claim 2 or 3 or to any of claims 5 to 10 in which the additional filtering steps are combined with the aforesaid comb filtering steps respectively.

12. A method according to any preceding claim, in which N is greater than one, and is preferably 313 or 625.

13. A method according to any preceding claim, in which the said processing is achieved by multiplication by a signal twice the subcarrier frequency and addition of the resultant to the original signal.

14. A method according to any preceding claim, in which the luminance and chrominance signals remain in analogue form.

15. A method of decoding in accordance with claim 4 sequentially followed by a method of encoding the decoded signals in accordance with claim 1.

16. A PAL coder for encoding Y, U and V signals into a PAL colour television signal, comprising:

luminance processing circuitry (42, 44 $F_{12}$) adapted to process a luminance input signal Y by adding to the signal overlaid spectral components formed by reflection in a signal having a frequency twice the colour subcarrier frequency in an upper portion of the video band, and to comb filter the resultant luminance signal at least over the said upper portion of the video band with a modulus sine response having peaks at integral multiples of $f_L/N$, where $f_L$ is the television line frequency and N is an odd integer;

chrominance processing circuitry (46, 48, 50, $F_{22}$) adapted to form the U and V signals into a composite chrominance signal C based on U+V and U—V on alternate lines, to modulate the chrominance signal C onto a signal of colour subcarrier frequency having peaks coincident with peaks of the signal of twice the colour subcarrier frequency, and to comb filter the modulated chrominance signal with a modulus sine response having peaks at odd integral multiples of $f_L/2N$; and

combining means (52) for combining the comb-filtered luminance signal and comb-filtered modulated chrominance signal to provide a PAL output signal.

17. Apparatus according to claim 16, including an additional filter ($F_{01}$) to prefilter the Y signal.

18. Apparatus according to claim 16, including additional filters ($F_{31}$, $F_{41}$) to prefilter the U and V signals.

19. A PAL decoder for decoding a PAL colour television signal into Y, U and V signals, comprising:

chrominance processing circuitry ($F_{21}$, 66, $LP_1$, 68) adapted to comb filter the PAL signal at least over an upper portion of the video band with a modulus sine response having peaks at odd integral multiples of $f_L/2N$ to provide a first comb-filtered signal thereby co-phasing the modulated U and V

9

chrominance components of the PAL input signal in respect of uniformly coloured areas of picture, to multiply the first comb filtered signal by an appropriately-phased signal of subcarrier frequency to provide a demodulated chrominance signal based on U+V and U—V on alternate lines and to separate the demodulated signal into its orthogonal U and V components; and

luminance processing circuitry ($F_{11}$, 62, 63) adapted to comb filter the PAL signal at least over an upper portion of the video band with a modulus sine response having peaks at integral multiples of $f_L/N$, where $f_L$ is the television line frequency, and N is an odd integer, to provide a second comb-filtered signal, and to process the second comb filtered signal by adding to the signal overlaid spectral components formed by reflection in a signal having a frequency twice the colour sub-carrier frequency and having peaks coincident with peaks of the signal of colour subcarrier frequency to provide a luminance signal Y.

20. Apparatus according to claim 19, including an additional filter ($F_{02}$) to post-filter the Y signal.

21. Apparatus according to claim 19, including additional filters ($F_{32}$, $F_{42}$) to post-filter the U and V signals.

22. Apparatus according to claim 17 or 20, in which the additional filter is a comb filter with a modulus sine response having peaks at integral multiples of $f_L/N$.

23. Apparatus according to claim 17 or 20, in which the additional filter is a one or two dimensional low-pass filter cutting near the subcarrier frequency.

24. Apparatus according to claim 18 or 21, in which the additional filters are comb filters having a modulus sine response having peaks at integral multiples of $f_L/N$.

25. Apparatus according to claim 18 or 21, in which the additional filters are filters which take weighted contributions from several consecutive lines in a field to form a vertical low-pass filter cutting near 78 cycles per picture height.

26. Apparatus according to claim 17 or 18 or to any of claims 20 to 25, in which the additional filters are combined with the aforesaid comb filters respectively (Figs. 6, 7).

27. Apparatus according to any of claims 16 to 26, in which N is greater than one, and is preferably 313 or 625.

28. Apparatus according to any of claims 16 to 27, in which the said processing is achieved by means (42, 44; 62, 63) for multiplication by a signal of twice the subcarrier frequency and addition of the resultant to the original signal.

29. Apparatus according to any of claims 16 to 28, in which the processing circuitry operates with the signals remaining in analogue form.

30. A decoder according to claim 19 having an encoder according to claim 16 coupled to its outputs.

31. A PAL coder comprising first, second and third inputs for receiving Y, U and V input signals respectively; V-axis switching means (46) for switching the V signal; chrominance multipliers (74, 76) for modulating the U and V signals onto subcarrier at orthogonal phase positions; combining means (48, 82) for combining the U and V signals and subtracting them from the Y input signal; a luminance-stop comb filter ($\overline{L}$) connected to the output of the combining means; and a subtractor (84) for subtracting the thus-filtered signal from the luminance input signal to provide a PAL output signal, in which the luminance-stop filter comprises first and second delays (150, 152) connected in series each of an odd number of lines; half-differencing means (158) for taking half the difference between the filter input signal and the output of the second delay; multiplying means (162) for multiplying the output of the half-differencing means by a signal of twice subcarrier frequency of appropriate phase; and combining means (154, 156, 164) for subtracting the average of the filter input signal and the output of the second delay from the output of the first delay and for averaging the resultant and the output of the multiplying means.

32. A PAL decoder comprising an input for receiving a PAL input signal; a luminance-stop comb filter ($\overline{L}$) connected to the input; a subtractor (86) connected to subtract the output of the luminance-stop filter from the input signal to provide a Y output signal; chrominance multipliers (78, 80) for multiplying the output of the luminance-stop filter by two subcarrier signals of orthogonal phase to provide a U output signal and a switched V signal; and V-axis switching means (68) for removing the V-axis switching to provide a V output signal, in which the luminance-stop filter comprises first and second delays (150, 152) connected in series each of an odd number of lines; half-differencing means (158) for taking half the difference between the filter input signal and the output of the second delay; multiplying means (162) for multiplying the output of the half-differencing means by a signal of twice subcarrier frequency of appropriate phase; and combining means (154, 156, 164) for subtracting the average of the filter input signal and the output of the second delay from the output of the first delay and for averaging the resultant and the output of the multiplying means.

33. A television signal processing arrangement for extracting a luminance signal from a PAL input signal, comprising an input for receiving a PAL input signal and a luminance-stop comb filter ($\overline{L}$) connected to the input; a subtractor (86) connected to subtract the output of the luminance-stop filter from the input signal to provide a Y output signal; in which the luminance-stop filter comprises first and second delays (150, 152) connected in series each of an odd number of lines; half-differencing means (158) for taking half the difference between the filter input signal and the output of the second delay;

multiplying means (162) for multiplying the output of the half-differencing means by a signal of twice subcarrier frequency of appropriate phase; and combining means (154, 156, 164) for subtracting the average of the filter input signal and the output of the second delay from the output of the first delay and for averaging the resultant and the output of the multiplying means.

34. A PAL chrominance separator comprising an input for receiving a PAL input signal; a luminance-stop comb filter ($\overline{L}$) connected to the input; multipliers (78, 80) for multiplying the output of the luminance-stop filter by two subcarrier signals of orthogonal phase to provide a U output signal and a switched V signal; and V-axis switching means (68) for removing the V-axis switching to provide a V output signal; in which the luminance-stop filter comprises first and second delays (150, 152) connected in series each of an odd number of lines; half-differencing means (158) for taking half the difference between the filter input signal and the output of the second delay; multiplying means (162) for multiplying the output of the half-differencing means by a signal of twice subcarrier frequency of appropriate phase; and combining means (154, 156, 164) for subtracting the average of the filter input signal and the output of the second delay from the output of the first delay and for averaging the resultant and the output of the multiplying means.

**Patentansprüche**

1. Verfahren zum Codieren von Signalen Y, U und V in ein PAL-Farbfernsehsignal, umfassend:
Verarbeitung des Luminanzsignals Y zum Bereitstellen eines verarbeiteten Signals, in welchem in einem oberen Bereich des Videobandes überlagerte spektrale Komponenten, die durch Reflexion in einem Signal mit einer der zweifachen Farbträgerfrequenz entsprechenden Frequenz entstanden sind, dem Luminanzsignal hinzugefügt sind,
Kammfilterung des verarbeiteten Signals wenigstens über den oberen Bereich des Videobandes mit einer Sinusbetragsverlauf-Filterkurve, deren Maxima bei ganzzahligen Vielfachen von $f_L/N$ liegen, wobei $f_L$ die Fernsehzeilenfrequenz und N eine ungerade ganze Zahl ist,
Formung der Signale U und V in ein zusammengesetztes Chrominanzsignal C aufgrund von U+V und U—V in abwechselnden Zeilen,
Modulation des Chrominanzsignals C auf ein Signal mit der Farbträgerfrequenz und mit Maxima, die mit den Maxima des Signals der zweifachen Farbträgerfrequenz zusammenfallen,
Kammfilterung des modulierten Chrominanzsignals mit einer Sinusbetragsverlauf-Filterkurve, deren Maxima bei ungeraden ganzzahligen Vielfachen von $f_L/2N$ liegen, und
Vereinigung des kammgefilterten Luminanzsignals und des kammgefilterten modulierten Chrominanzsignals zur Bereitstellung eines codierten PAL-Signals.
2. Verfahren nach Anspruch 1, einschließlich zusätzlicher Filterung zur Vorfilterung des Y-Signals.
3. Verfahren nach Anspruch 1, einschließlich zusätzlicher Filterung zur Vorfilterung der U- und V-Signale.
4. Verfahren zum Decodieren eines PAL-Farbfernsehsignals in Signale Y, U und V, umfassend:
Kammfilterung des PAL-Signals wenigstens über einen oberen Bereich des Videobandes mit einer Sinusbetragsverlauf-Filterkurve, deren Maxima bei ungeraden ganzzahligen Vielfachen von $f_L/2N$ liegen, um ein erstes kammgefiltertes Signal vorzusehen und dabei die modulierten U- und V-Chrominanzkomponenten des PAL-Eingangssignals im Hinblick auf gleichförmig farbige Bildflächen in Gleichphase zu bringen,
Multiplizieren des ersten kammgefilterten Signals mit einem geeignet phasigen Signal der Trägerfrequenz, um ein demoduliertes Chrominanzsignal aufgrund von U+V und U—V in abwechselnden Zeilen vorzusehen,
Trennung des Multiplikationssignals in seine U- und V-Komponenten,
Kammfilterung des PAL-Signals wenigstens über einen oberen Bereich des Videobandes mit einer Sinusbetragsverlauf-Filterkurve, deren Maxima bei ganzzahligen Vielfachen von $f_L/N$ liegen, wobei $f_L$ die Fernsehzeilenfrequenz und N eine ungerade ganze Zahl ist, um ein zweites kammgefiltertes Signal vorzusehen, und
Verarbeitung des zweiten kammgefilterten Signals zum Bereitstellen eines Luminanzsignals Y, in welchem über das Videoband überlagerte spektrale Komponenten, die durch Reflexion in einem Signal mit einer der zweifachen Farbträgerfrequenz entsprechenden Frequenz entstanden sind, dem zweiten kammgefilterten Signal in der geeigneten Phase hinzugefügt sind.
5. Verfahren nach Anspruch 4, einschließlich zusätzlicher Filterung zur Nachfilterung des Y-Signals.
6. Verfahren nach Anspruch 4, einschließlich zusätzlicher Filterung zur Nachfilterung der U- und V-Signale.
7. Verfahren nach Anspruch 2 oder 5, bei dem die zusätzliche Filterung eine Kammfilterung mit einer Sinusbetragsverlauf-Filterkurve darstellt, deren Maxima bei ganzzahligen Vielfachen von $f_L/N$ liegen.
8. Verfahren nach Anspruch 2 oder 5, bei dem die zusätzliche Filterung eine ein- oder zweidimensionale Tiefpaßfilterung mit Abtrennung nahe bei der Trägerfrequenz darstellt.
9. Verfahren nach Anspruch 3 oder 6, bei dem die zusätzliche Filterung eine Kammfilterung mit

11

einer Sinusbetragsverlauf-Filterkurve darstellt, deren Maxima bei ganzzahligen Vielfachen von $f_L/N$ liegen.

10. Verfahren nach Anspruch 3 oder 6, bei dem die zusätzliche Filterung gewichtete Beiträge aus einigen aufeinanderfolgenden Zeilen in einem Halbbilde berücksichtigt, um ein vertikales Tiefpaßfilter mit Abtrennung nahe bei 78 Schwingungen pro Bildhöhe zu bilden.

11. Verfahren nach Anspruch 2 oder 3 oder irgendeinem der Ansprüche 5 bis 10, bei dem die zusätzlichen Filterungsschritte mit den jeweils vorgenannten Kammfilterungsschritten vereinigt sind.

12. Verfahren nach einem der vorstehenden Ansprüche, bei dem N größer als 1 ist und vorzugsweise 313 oder 625 beträgt.

13. Verfahren nach einem der vorstehenden Ansprüche, bei dem die Verarbeitung dadurch ausgeführt wird, daß eine Multiplikation mit einem Signal der zweifachen Trägerfrequenz und eine Addition des Resultats zu dem ursprünglichen Signal vorgenommen werden.

14. Verfahren nach einem der vorstehenden Ansprüche, bei dem die Luminanz- und Chrominanzsignale in analoger Form aufrechterhalten werden.

15. Verfahren zum Decodieren gemäß Anspruch 4 sequentiell gefolgt von einem Verfahren zum Codieren der decodierten Signale gemäß Anspruch 1.

16. PAL-Coder zum Codieren von Signalen Y, U und V in ein PAL-Farbfernsehsignal, enthaltend:
eine Luminanzverarbeitungsschaltung (42, 44, $F_{12}$) zur Verarbeitung eines Luminanzeingangssignals Y derart, daß diesem Signal in einem oberen Bereich des Videobandes überlagerte Spektralkomponenten hinzugefügt werden, die durch Reflexion in einem Signal mit einer der zweifachen Farbträgerfrequenz entsprechenden Frequenz entstanden sind und daß das resultierende Luminanzsignal wenigstens über diesen oberen Bereich des Videobandes einer Kammfilterung mit einer Sinusbetragsverlauf-Filterkurve unterzogen wird, deren Maxima bei ganzzahligen Vielfachen von $f_L/N$ liegen, wobei $f_L$ die Fernsehzeilenfrequenz und N eine ungerade ganze Zahl ist,
eine Chrominanzverarbeitungsschaltung (46, 48, 50, $F_{22}$) zur Formung der U- und V-Signale in ein zusammengesetztes Chrominanzsignal C aufgrund von U+V und U–V in abwechselnden Zeilen, zur Modulation des Chrominanzsignals C auf ein Signal der Farbträgerfrequenz mit Maxima, die mit den Maxima des Signals der zweifachen Farbträgerfrequenz zusammenfallen, und zur Kammfilterung des modulierten Chrominanzsignals mit einer Sinusbetragsverlauf-Filterkurve, deren Maxima bei ungeraden ganzzahligen Vielfachen von $f_L/2N$ liegen, und
eine Vereinigungseinrichtung (52) zum Vereinigen des kammgefilterten Luminanzsignals und des kammgefilterten modulierten Chrominanzsignals zum Bereitstellen eines PAL-Ausgangssignals.

17. Gerät nach Anspruch 16, einschließlich eines zusätzlichen Filters ($F_{01}$) zur Vorfilterung des Y-Signals.

18. Gerät nach Anspruch 16, einschließlich zusätzlicher Filter ($F_{31}$, $F_{41}$) zur Vorfilterung der U- und V-Signale.

19. PAL-Decoder zum Decodieren eines PAL-Farbfernsehsignals in Signale Y, U und V, enthaltend:
eine Chrominanzverarbeitungsschaltung ($F_{21}$, 66, $LP_1$, 68) zur Kammfilterung des PAL-Signals wenigstens über einen oberen Bereich des Videobandes mit einer Sinusbetragsverlauf-Filterkurve, deren Maxima bei ungeraden ganzzahligen Vielfachen von $f_L/2N$ liegen, um ein erstes kammgefiltertes Signal vorzusehen und dadurch die modulierten U- und V-Chrominanzkomponenten des PAL-Eingangssignals hinsichtlich gleichförmig farbiger Bildflächen in Gleichphase zu bringen, zur Multiplikation des ersten kammgefilterten Signals mit einem geeignet phasigen Signal der Trägerfrequenz, um ein demoduliertes Chrominanzsignal aufgrund von U+V und U–V in abwechselnden Zeilen vorzusehen, und zur Trennung des demodulierten Signals in seine orthogonalen U- und V-Komponenten, und
eine Luminanzverarbeitungsschaltung ($F_{11}$, 62, 63) zur Kammfilterung des PAL-Signals wenigstens über einen oberen Bereich des Videobandes mit einer Sinusbetragsverlauf-Filterkurve, deren Maxima bei ganzzahligen Vielfachen von $f_L/N$ liegen, wobei $f_L$ die Fernsehzeilenfrequenz und N eine ungerade ganze Zahl ist, um ein zweites kammgefiltertes Signal vorzusehen, und zur Verarbeitung des zweiten kammgefilterten Signals derart, daß zu diesem Signal überlagerte spektrale Komponenten hinzugefügt werden, die durch Reflexion in einem Signal mit einer der zweifachen Farbträgerfrequenz entsprechenden Frequenz und mit Maxima, die mit den Maxima des Signals der Farbträgerfrequenz zusammenfallen, entstanden sind, um ein Luminanzsignal Y vorzusehen.

20. Gerät nach Anspruch 19, einschließlich eines zusätzlichen Filters ($F_{02}$) zur Nachfilterung des Y-Signals.

21. Gerät nach Anspruch 19, einschließlich zusätzlicher Filter ($F_{32}$, $F_{42}$) zur Nachfilterung der U- und V-Signale.

22. Gerät nach Anspruch 17 oder 20, bei dem das zusätzliche Filter ein Kammfilter mit einer Sinusbetragsverlauf-Filterkurve ist, deren Maxima bei ganzzahligen Vielfachen von $f_L/N$ liegen.

23. Gerät nach Anspruch 17 oder 20, bei dem das zusätzliche Filter ein ein- oder zweidimensionales Tiefpaßfilter mit Abtrennung nahe bei der Trägerfrequenz ist.

24. Gerät nach Anspruch 18 oder 21, bei dem die zusätzlichen Filter Kammfilter mit einer Sinusbetragsverlauf-Filterkurve sind, deren Maxima bei ganzzahligen Vielfachen von $f_L/N$ liegen.

25. Gerät nach Anspruch 18 oder 21, bei dem die zusätzlichen Filter Filter darstellen, die gewich-

**0015 134**

tete Beiträge von einigen aufeinanderfolgenden Zeilen in einem Halbbild berücksichtigen, um ein vertikales Tiefpaßfilter mit Abtrennung nahe bei 78 Schwingungen pro Bildhöhe zu bilden.

26. Gerät nach Anspruch 17 oder 18 oder einem der Ansprüche 20 bis 25, bei dem die zusätzlichen Filter mit den jeweiligen genannten Kammfiltern vereinigt sind (Fig. 6, 7).

27. Gerät nach einem der Ansprüche 16 bis 26, bei dem N größer als 1 ist und vorzugsweise 313 oder 625 beträgt.

28. Gerät nach einem der Ansprüche 16 bis 27, bei dem die Verarbeitung durch eine Einrichtung (42, 44; 62, 63) ausgeführt wird, die eine Multiplikation mit einem Signal der zweifachen Trägerfrequenz und eine Addition des Resultats zu dem ursprünglichen Signal vornimmt.

29. Gerät nach einem der Ansprüche 16 bis 18, bei dem die Verarbeitungsschaltung die Verarbeitung der Signale unter Aufrechterhaltung der Signale in analoger Form ausführt.

30. Decoder nach Anspruch 19 mit einem an seine Ausgänge angeschlossenen Codierer nach Anspruch 16.

31. PAL-Codierer, enthaltend einen ersten, zweiten und dritten Eingang zum Anlegen von Eingangssignalen Y, U bzw. V; eine V-Achse-Schaltereinrichtung (46) zum Schalten des V-Signals; Chrominanzmultiplizierer (74, 76) zur Modulation der U- und V-Signale auf einen Träger bei orthogonalen Phasenlagen; eine Vereinigungseinrichtung (48, 82) zur Vereinigung der U- und V-Signale und zu ihrer Subtraktion von dem Y-Eingangssignal; ein an den Ausgang der Vereinigungseinrichtung angeschlossenes Luminanzsperrkammfilter ($\overline{L}$); und einen Substrahierer (84) zur Subtraktion des derart gefilterten Signals von dem Luminanzeingangssignal, um ein PAL-Ausgangssignal vorzusehen; wobei das Luminanzsperrfilter enthält: eine erste und eine zweite Verzögerungseinrichtung (150, 152), die miteinander in Reihe geschaltet sind und jeweils eine einer ungeraden Anzahl von Zeilen entsprechende Verzögerung aufweisen; eine halbierende Differenzbildungseinrichtung (158) zur Bildung der halben Differenz zwischen dem Filtereingangssignal und dem Ausgangssignal der zweiten Verzögerungseinrichtung; eine Multipliziereinrichtung (162) zur Multiplikation des Ausgangs der halbierenden Differenzbildungseinrichtung mit einem Signal der zweifachen Trägerfrequenz geeigneter Phase; und eine Vereinigungseinrichtung (154, 156, 164) zur Subtraktion des Mittelwerts des Filtereingangssignals und des Ausgangs der zweiten Verzögerungseinrichtung vom Ausgang der ersten Verzögerungseinrichtung und zur Mittelung des sich ergebenden Resultats und des Ausgangs der Multipliziereinrichtung.

32. PAL-Decoder, enthaltend einen Eingang zum Anlegen eines PAL-Eingangssignals; ein mit dem Eingang verbundenes Luminanzsperrkammfilter ($\overline{L}$); einen Subtrahierer (86) zur Subtraktion des Ausgangs des Luminanzsperrfilters vom Eingangssignal, um ein Y-Ausgangssignal vorzusehen; Chrominanzmultiplizierer (78, 80) zum Multiplizieren des Ausgangs des Luminanzstoppfilters mit zwei Trägersignalen orthogonaler Phase, um ein U-Ausgangssignal und ein geschaltetes V-Ausgangssignal vorzusehen; und eine V-Achse-Schaltereinrichtung (68) zum Entfernen der geschalteten V-Achse, um ein V-Ausgangssignal vorzusehen; wobei das Luminanzsperrfilter enthält: eine erste und eine zweite Verzögerungseinrichtung (150, 152), die miteinander in Reihe geschaltet sind und jeweils eine einer ungeraden Anzahl von Zeilen entsprechende Verzögerung aufweisen; eine halbierende Differenzbildungseinrichtung (158) zur Bildung der halben Differenz zwischen dem Filtereingangssignal und dem Ausgang der zweiten Verzögerungseinrichtung; eine Multipliziereinrichtung (162) zur Multiplikation des Ausgangs der halbierenden Differenzbildungseinrichtung mit einem Signal der zweifachen Trägerfrequenz geeigneter Phase; und eine Vereinigungseinrichtung (154, 156, 164) zur Subtraktion des Mittelwerts des Filtereingangssignals und des Ausgangs der zweiten Verzögerungseinrichtung von dem Ausgang der ersten Verzögerungseinrichtung und zur Mittelung des resultierenden Ergebnisses und des Ausgangs der Multipliziereinrichtung.

33. Fernsehsignal-Verarbeitungsanordnung zum Extrahieren eines Luminanzsignals aus einem PAL-Eingangssignal, enthaltend einen Eingang zum Anlegen eines PAL-Eingangssignals; ein mit dem Eingang verbundenes Luminanzsperrkammfilter ($\overline{L}$); und einen Subtrahierer (86) zur Subtraktion des Ausgangs des Luminanzsperrfilters vom Eingangssignal, um ein Y-Ausgangssignal vorzusehen, wobei das Luminanzsperrfilter enthält: eine erste und eine zweite Verzögerungseinrichtung (150, 152), die in Reihe miteinander geschaltet sind und jeweils eine einer ungeraden Anzahl von Zeilen entsprechende Verzögerung aufweisen; eine halbierende Differenzbildungseinrichtung (158) zur Bildung der halben Differenz zwischen dem Filtereingangssignal und dem Ausgang der zweiten Verzögerungseinrichtung; eine Multipliziereinrichtung (162) zur Multiplikation des Ausgangs der halbierenden Differenzbildungseinrichtung mit einem Signal der zweifachen Trägerfrequenz geeigneter Phase; und eine Vereinigungseinrichtung (154, 156, 164) zur Subtraktion des Mittelwerts des Filtereingangssignals und des Ausgangs der zweiten Verzögerungseinrichtung vom Ausgang der ersten Verzögerungseinrichtung und zur Mittelung des resultierenden Ergebnisses und des Ausgangs der Multipliziereinrichtung.

34. PAL-Chrominanztrenneinrichtung, enthaltend einen Eingang zum Anlegen eines PAL-Eingangssignals; ein mit dem Eingang verbundenes Luminanzsperrkammfilter ($\overline{L}$); Multiplizierer (78, 80) zur Multiplikation des Ausgangs des Luminanzsperrfilters mit zwei Trägersignalen orthogonaler Phase, um ein U-Ausgangssignal und ein geschaltetes V-Signal vorzusehen; und eine V-Achse-Schaltereinrichtung (68) zum Entfernen der geschalteten V-Achse, um ein V-Ausgangssignal vorzusehen; wobei das Luminanzsperrfilter enthält: eine erste und eine zweite Verzögerungseinrichtung (150, 152), die in Reihe miteinander verbunden sind und jeweils eine einer ungeraden Anzahl von Zeilen entsprechende

13

**0 015 134**

Verzögerung aufweisen; eine halbierende Differenzbildungseinrichtung (158) zur Bildung der halben Differenz zwischen dem Filtereingangssignal und dem Ausgang der zweiten Verzögerungseinrichtung; eine Multipliziereinrichtung (162) zur Multiplikation des Ausgangs der halbierenden Differenzbildungseinrichtung mit einem Signal der zweifachen Trägerfrequenz geeigneter Phase; und eine Vereinigungseinrichtung (154, 156, 164) zur Subtraktion des Mittelwerts des Filtereingangssignals und des Ausgangs der zweiten Verzögerungseinrichtung vom Ausgang der ersten Verzögerungseinrichtung und zur Mittelung des resultierenden Ergebnisses und des Ausgangs der Multipliziereinrichtung.

**Revendications**

1. Méthode de codage des signaux Y, U et V dans un signal de télévision en couleur, comprenant:

le traitement du signal de luminance Y pour délivrer un signal traité dans lequel dans une portion supérieure de la bande vidéo des composantes spectrales formées par réflexion dans un signal dont la fréquence est le double de la fréquence de sous-porteuse couleur, sont ajoutées au signal de luminance;

le filtrage en peigne dudit signal traité au moins sur ladite portion supérieure de la bande vidéo avec une réponse sinusoïdale présentant des crêtes pour des multiples entiers de $f_L/N$, où $f_L$ est la fréquence lignes de télévision, et où N est un nombre entier impair;

la formation des signaux U et V dans un signal complet de chrominance C basé sur U+V et U—V sur des lignes alternées;

la modulation du signal de chrominance C sur un signal de la fréquence de sous-porteuse couleur ayant des crêtes qui coïncident avec les crêtes du signal dont la fréquence est double de celle de la sous-porteuse couleur;

le filtrage en peigne du signal de chrominance modulé avec une réponse sinusoïdale de rendement ayant des crêtes pour des multiples entiers impairs de $f_L/2N$, et

la combinaison du signal de luminance filtré en peigne et du signal de chrominance modulé filtré en peigne pour produire un signal PAL codé.

2. Une méthode conforme à la revendication 1, comprenant un filtrage supplémentaire de façon à préfiltrer le signal Y.

3. Une méthode conforme à la revendication 1, comprenant un filtrage supplémentaire de façon à préfiltrer les signaux U et V.

4. Une méthode de décodage d'un signal de télévision en couleur PAL en signaux Y, U et V, comprenant:

le filtrage par peigne du signal PAL au moins sur une portion supérieure de la bande vidéo, avec une réponse sinusoïdale ayant des crêtes pour des multiples entiers impairs de $f_L/2N$ de façon à fournir un premier signal filtré en peigne, mettant ainsi les composantes de chrominance U et V modulées en phase sur le signal d'entrée PAL pour ce qui est des zones d'image uniformément colorées;

la multiplication du premier signal filtré en peigne par un signal de phase appropriée de fréquence de sous-porteuse de façon à procurer un signal de chrominance démodulé basé sur des lignes alternées U+V et U—V;

la séparation du signal multiplié en composantes U et V;

le filtrage en peigne du signal PAL au moins sur une portion supérieure de la bande vidéo avec une réponse sinusoïdale avec des crêtes placées à des multiples entiers de $f_L/N$ où $f/_L$ est la fréquence lignes de télévision et N un nombre entier impair de façon à procurer le second signal filtré par peigne;

le traitement du second signal filtré en peigne pour procurer un signal de luminance Y dans lequel, sur la bande vidéo, des composantes spectrales superposées formées par réflexion dans un signal ayant une fréquence égale au double de la fréquence de sous-porteuse couleur sont ajoutées au second signal filtré en peigne dans la phase appropriée.

5. Une méthode conforme à la revendication 4, comprenant un filtrage supplémentaire pour post-filtrer le signal Y.

6. Une méthode conforme à la revendication 4, comprenant un filtrage supplémentaire pour post-filtrer les signaux U et V.

7. Une méthode conforme à la revendication 2 ou 5, dans laquelle le filtrage supplémentaire procure un filtrage en peigne avec une réponse sinusoïdale pour des multiples entiers de $f_L/N$.

8. Un méthode conforme à la revendication 2 ou 5, dans laquelle le filtrage supplémentaire procure une coupure par filtrage passe-bas mono ou bidimentionnel proche de la fréquence de sous-porteuse.

9. Une méthode conforme à la revendication 3 ou 6, dans laquelle le filtrage supplémentaire procure un filtrage en peigne avec une réponse sinusoïdale présentant des crêtes des multiples de $f_L/N$.

10. Une méthode conforme à la revendication 3 ou 6, dans laquelle le filtrage supplémentaire reçoit des contributions pondérées depuis plusieurs lignes consécutives d'une trame de façon à former une coupure verticale par filtre passe-bas proche de 78 périodes par hauteur d'image.

11. Une méthode conforme à la revendication 2 ou 3 à l'une quelconque des revendications 5 à 10 dans laquelle le filtrage supplémentaire présente des stades combinés respectivement aux stades du filtrage en peigne mentionné ci-dessus.

14

**0 015 134**

12. Une méthode conforme à l'une quelconque des revendications précédentes, dans laquelle N est supérieur à un, et se trouve égal de préférence à 313 ou 625.

13. Une méthode conforme à l'une quelconque des revendications précédentes, dans laquelle ledit traitement est réalisé par multiplication par un signal égal au double de la fréquence de sous-porteuse et par l'addition de la résultante au signal original.

14. Une méthode conforme à l'une quelconque des revendications précédentes dans laquelle des signaux de luminance et de chrominance demeurent sous forme analogique.

15. Une méthode de décodage conforme à la revendication 4, suivie séquentiellement par une méthode d'encodage des signaux décodés conforme à la revendication 1.

16. Un encodeur PAL pour coder les signaux Y, U et V dans un signal de télévision en couleur, comprenant:

le circuit de traitement de luminance $(42, 44\ F_{12})$ conçu pour traiter un signal d'entrée de luminance Y en ajoutant au signal des composantes spectrales superposées formées par réflexion dans un signal ayant une fréquence double de la fréquence de sous-porteuse couleur dans une portion supérieure de la bande vidéo, et de filtrer en peigne le signal de luminance résultant au moins sur ladite portion supérieure de la bande vidéo avec une réponse sinusoïdale présentant des crêtes à des multiples entiers de $f_L/N$, où $f_L$ est la fréquence ligne de télévision et où N est un nombre entier impair;

le circuit de traitement de chrominance $(46, 48, 50, F_{22})$ conçu pour former les signaux U et V et en faire le signal de chrominance complet C basé sur U+V et U—V sur des lignes alternées, pour moduler le signal de chrominance C sur un signal de fréquence égale à celle de sous-porteuse couleur présentant des crêtes qui coïncident avec les crêtes du signal dont la fréquence est le double de la fréquence de sous-porteuse couleur, et pour filtrer en peigne le signal de chrominance modulé avec une réponse sinusoïdale présentant des crêtes pour des multiples entiers impairs de $f_L/2N$, et

un moyen de combinaison (52) pour combiner le signal de luminance filtré en peigne et le signal de chrominance modulé filtré en peigne pour procurer un signal de sortie PAL.

17. Un appareil conforme à la revendication 16 comprenant un filtre supplémentaire $(F_{01})$ pour préfiltrer le signal Y.

18. Appareil conforme à la revendication 16, comprenant des filtres supplémentaires $(F_{31}, F_{41})$ pour préfiltrer les signaux U et V.

19. Un décodeur PAL pour décoder un signal de télévision en couleur PAL dans des signaux Y, U et V, et comprenant:

le circuit de traitement de chrominance $(F_{21}, 66, LP_1, 68)$ conçu pour filtrer en peigne le signal PAL au moins sur une portion supérieure de la bande vidéo avec une réponse sinusoïdale présentant des crêtes pour des multiples entiers impairs de $f_L/2N$ de façon à procurer un premier signal filtré en peigne mettant en phase les composantes U et V modulées du signal d'entrée PAL par rapport aux zones d'image uniformément colorées, pour multiplier le premier signal filtré en peigne par un signal de phase appropriée de fréquence de sous-porteuse afin de délivrer un signal de chrominance démodulé basé sur U+V et U—V sur des lignes alternées et pour préparer le signal démodulé selon ses composantes orthogonales U et V; et

un circuit de traitement de luminance $(F_{11}, 62, 63)$ conçu pour filtrer en peigne le signal PAL au moins sur une portion supérieure de la bande vidéo avec une réponse sinusoïdale, et des crêtes disposées selon les multiples entiers de $f_L/N$, dans lequel $f_L$ est la fréquence ligne de télévision, et où N est un nombre entier impair pour procurer un second signal filtré en peigne, et pour traiter le second signal filtré en peigne en additionnant au signal les composantes spectrales superposées formées par la réflexion dans un signal ayant une fréquence double de la fréquence de sous-porteuse couleur et ayant des crêtes qui coïncident avec les crêtes du signal de fréquence de sous-porteuse couleur pour délivrer un signal de luminance.

20. Appareil conforme à la revendication 19, comprenant un filtre supplémentaire $(F_{02}, F_{42})$ pour post-filtrer le signal Y.

21. Appareil conforme à la revendication 19, comprenant des filtres supplémentaires $(F_{32}, F_{42})$ pour post-filtrer les signaux U et V.

22. Appareil conforme à la revendication 17 on 20, dans lequel le filtre supplémentaire est un filtre en peigne ayant une réponse sinusoïdale et présentant des crêtes pour des multiples entiers de $f_L/N$.

23. Appareil conforme à la revendication 17 ou 20, dans lequel le filtre supplémentaire est un filtre passe-bas mono ou bidirectionnel ayant sa coupure près de la fréquence de sous-porteuse.

24. Appareil conforme à la revendication 18 ou 21, dans lequel les filtres supplémentaires sont des filtres en peigne ayant une réponse sinusoïdale et des crêtes pour des multiples entiers de $f_L/N$.

25. Appareil conforme à la revendication 18 ou 21, dans lequel les filtres supplémentaires sont des filtres qui reçoivent des contributions pondérées de plusieurs lignes consécutives dans une trame pour former un filtre vertical passe-bas d'une compure proche de 78 périodes par hauteur d'image.

26. Appareil conforme à la revendication 17 ou 18, ou à l'une quelconque des revendications 20 à 25, dans lequel les filtres supplémentaires sont combinés avec les filtres en peigne respectifs mentionnés ci-dessus.

15

# O 015 134

27. Appareil conforme à l'une quelconque des revendications 16 à 26, dans lequel N est supérieur à un, et est de préférence égal à 313 ou 625.

28. Appareil conforme à l'une quelconque des revendications 16 à 27 dans lequel ledit traitement est réalisé par des moyens (42, 44: 62, 63) pour la multiplication par un signal dont la fréquence est le double de la fréquence de sous-porteuse et pour l'addition de la résultante au signal original.

29. Appareil conforme à l'une quelconque des revendications 16 à 28 dans lequel le circuit de traitement fonctionne avec les signaux demeurant sous forme analogique.

30. Un décodeur conforme à la revendication 19, avec un encodeur conforme à la revendication 16 couplé à ses sorties.

31. Un codeur PAL comprenant une première, une seconde et une troisième entrées pour recevoir des signaux d'entrée respectifs Y, U et V; un moyen de commutation (46) sur l'axe V pour commuter le signal V; des multiplicateurs de chrominance (74, 76) pour moduler les signaux U et V sur la sous-porteuse à des positions de phase orthogonales, des moyens de combinaison (48, 82) pour combiner les signaux U et V et pour les soustraire du signal d'entrée Y, un filtre en peigne (L) d'arrêt de luminance connecté à la sortie du moyen de combinaison; et un soustracteur (84) pour soustraire le signal ainsi filtré du signal d'entrée de luminance de façon à délivrer un signal de sortie PAL; dans lequel le filtre d'arrêt de luminance comprend un premier et un second circuits de retard (150, 152) connectés en série chacun d'un nombre impair de lignes; un moyen de demi-différentiation (158) pour prendre la moitié de la différence entre le signal d'entrée de filtre et la sortie du second circuit de retard, un moyen de multiplication (162) pour multiplier la sortie du moyen de demi-différentiation par un signal de fréquence double de la fréquence de sous-porteuse de phase appropriée; et un moyen de combinaison (154, 156, 164) pour soustraire la moyenne du signal de sortie de filtre et la sortie du second circuit de retard de la sortie du premier circuit de retard et pour faire une moyenne de la résultante et de la sortie du moyen de multiplication.

32. Un décodeur PAL comprenant une entrée pour recevoir un signal d'entrée PAL; un filtre en peigne d'arrêt luminance ($\overline{L}$) connecté à l'entrée un soustracteur (86) connecté de façon à soustraire la sortie du filtre d'arrêt de luminance du signal d'entrée pour délivrer un signal de sortie Y; des multiplicateurs de chrominance (78, 80) pour multiplier la sortie du filtre d'arrêt de luminance par deux signaux de sous-porteuse de phase orthogonale pour procurer un filtre de sortie U et un signal commuté V; et un moyen de commutation de l'axe V (68) pour supprimer la commutation de l'axe V pour délivrer un signal de sortie V; dans lequel le filtre d'arrêt de luminance comprend un premier et un second circuits de retard (150, 152) connectés en série chacun d'un nombre impair de lignes, un moyen de demi-différentiation (158) pour prendre la motié de la différence entre le signal d'entrée de filtre et la sortie du second circuit de retard un moyen multiplicateur (162) pour multiplier la sortie du moyen de demi-différentiation par un signal de fréquence double de celle de sous-porteuse de phase appropriée; et un moyen de combinaison (154, 156, 164) pour soustraire la moyenne du signal d'entrée de filtre et la sortie du second circuit de retard de la sortie du premier circuit de retard et pour obtenir la moyenne la résultante et la sortie du moyen de multiplication.

33. Un dispositif de traitement d'un signal de télévision destiné à extraire un signal de luminance d'un signal d'entrée PAL, comprenant une entrée destinée à recevoir un signal d'entrée PAL et un filtre en peigne ($\overline{L}$) d'arrêt de luminance connecté à l'entrée; un circuit soustracteur (86) connecté de façon à soustraire la sortie du filtre d'arrêt de luminance du signal d'entrée de façon à délivrer un signal de sortie Y; dans lequel le filtre d'arrêt de luminance comprend un premier et un second circuits de retard (150, 152) connectés en série chacun d'un nombre impair de lignes, un moyen de demi-différentiation (158) pour prendre la moitié de la différence entre le signal d'entrée de filtre et la sortie du second circuit de retard un moyen multiplicateur (162) pour multiplier la sortie du moyen de demi-différentiation par un signal de fréquence double de la fréquence de sous-porteuse de phase appropriée; et des moyens de combinaison (154, 156, 164) pour soustraire la moyenne du signal d'entrée de filtre et la sortie du second circuit de retard de la sortie du premier circuit de retard et pour obtenir la moyenne de la résultante et de la sortie du moyen multiplicateur.

34. Un séparateur de chrominance PAL comprenant une entrée pour recevoir un signal d'entrée PAL; un filtre en peigne d'arrêt de luminance ($\overline{L}$) connecté à l'entrée; des multiplicateurs (78, 80) pour multiplier la sortie du filtre d'arrêt de luminance par deux signaux de sous-porteuse de phase orthogonale pour délivrer un signal de sortie U et un signal V commuté; et un moyen de commutation (68) de l'axe V pour délivrer un signal de sortie V; dans lequel le filtre d'arrêt de luminance comprend un premier et un second circuits de retard (150, 152) connectés en série chacun d'un nombre impair de lignes un moyen de demi-différentiation (158) pour prendre la moitié de la différence entre le signal d'entrée de filtre et la sortie du second circuit de retard un moyen de multiplication (162) pour multiplier la sortie du moyen de demi-différentiation par un signal de fréquence égale au double de la fréquence de sous-porteuse de phase appropriée; et un moyen de combinaison (154, 156, 164) pour soustraire la moyenne du signal d'entrée de filtre et la sortie du second circuit de retard de la sortie du premier circuit de retard et pour obtenir la moyenne de la résultante et la sortie du moyen multiplicateur.

$F_{IG}.1$

FIG. 2

2

# Fig. 3

SAMPLING
AT $2f_{SC}$

BASEBAND

MODULATION

VIDEO BAND

FIG. 4

FIG. 5

FIG. 6

FIG. 7

FIG.8

FIG. 9

FIG.10